# DEMANDE DE BREVET EUROPEEN

(11) **EP 0 713 022 A1**
(43) Date de publication de la demande: **22.05.1996**
(21) Numéro de dépôt: 95402571.4
(22) Date de dépôt: 16.11.1995
(51) Int. Cl.: F16C 39/06

(54) **Palier magnétique à noyau de bobine rapporté**

(30) Priorité: 21.11.1994 FR 9413896
(71) Demandeur: AEROSPATIALE Société Nationale Industrielle, F-75781 Paris Cédex 16 (FR)
(72) Inventeur: Jamain, Patrice, F-78580 Maule (FR); Lambert, Charles, F-78300 Poissy (FR)
(74) Mandataire: Rinuy, Santarelli

(57) **Abrégé**

Un palier magnétique pour le centrage magnétiquement actif selon au moins un axe de centrage (X-X), perpendiculaire à un axe de référence (Z-Z), d'une premier corps (B) mobile selon au moins cet axe de centrage par rapport à un second corps (A), comporte :
- au moins un élément aimanté (3),
- au moins une bobine (9) enroulée autour d'un noyau ferromagnétique (4) sensiblement parallèle à l'axe de référence et porté par le second corps,
- deux plaques ferromagnétiques parallèles (1, 2) perpendiculaires à l'axe de référence, rapportées chacune au noyau de part et d'autre de la bobine et ayant des tranches orientées transversalement à l'opposé des entrefers,

ce palier étant caractérisé en ce que ledit noyau (4) est rapporté auxdites plaques parallèles, sur les tranches de celles-ci

## Description

L'invention concerne un palier magnétique pour le centrage magnétiquement actif, selon au moins un axe de centrage0 perpendiculaire à un axe de référence, d'un premier corps mobile selon au moins cet axe de centrage par rapport à un second corps, comportant :
- au moins un élément à aimantation permanente sensiblement parallèle à l'axe de référence,
- au moins une bobine enroulée autour d'un noyau ferromagnétique sensiblement parallèle à l'axe de référence et porté par le second corps,
- une armature ferromagnétique formée d'une première partie ferromagnétique portée par le premier corps et d'une seconde partie ferromagnétique portée par le second corps, ces première et seconde parties ferromagnétiques étant adaptées conjointement à refermer sur eux-mêmes des flux générés par l'aimant et la bobine au travers d'entrefers séparant ces première et seconde parties ferromagnétiques, cette seconde partie ferromagnétique comportant deux plaques parallèles, perpendiculaires à l'axe de référence, rapportées chacune au noyau de part et d'autre de la bobine et ayant des tranches orientées transversalement à l'opposé des entrefers.

De manière fréquente, l'axe de référence est un axe de rotation.

Des exemples de tels paliers sont donnés dans les documents EP-0.284.487 ou US-4.470.644.

En fait les paliers précités se distinguent principalement par le fait que, dans le document US-4.470.644, les éléments à aimantation permanente sont portés par un corps distinct de celui-ci sur lequel sont montées les bobines tandis que dans le document EP-0.284.487, les éléments à aimantation permanente sont montés sur le même corps que les bobines.

En pratique, les bobines de paliers magnétiques du type précité sont engagées sur des noyaux interposés entre deux plaques ferromagnétiques, les lignes de flux traversant longitudinalement les noyaux, en entrant et en sortant de ces noyaux par les tranches de ces derniers. L'accès à ces noyaux n'est donc possible qu'au cours de la fabrication (cet accès est impossible une fois que l'assemblage du palier est terminé, et a fortiori lorsque le palier est monté dans un ensemble prêt à fonctionner). Par ailleurs, le bon contrôle de l'induction exige un excellent contrôle de la hauteur des noyaux pour que leurs tranches viennent exactement là où il faut, contre les plaques ferromagnétiques (voire, contre l'une de ces plaques et contre une cale statique formant entrefer comme le recommande le document EP-0.284.487 précité). Un tel contrôle peut se révéler toutefois délicat, lorsque plusieurs noyaux doivent être positionnés entre les deux mêmes plaques.

L'invention a pour objet de pallier les inconvénients précités en permettant le montage individuel de chaque noyau d'un palier (indépendamment de la question de savoir si les autres noyaux ont, ou non, été déjà mis en place).

L'invention a également pour objet de simplifier les exigences de stockage avant fabrication, de manière que, en particulier, les plaques ferromagnétiques puissent être dimensionnées et fabriquées même dans l'ignorance des caractéristiques géométriques des ensembles bobines-noyaux avec lesquelles elles devront finalement être intégrées, grâce à une modularité de conception des paliers. La réciproque est avantageusement recherchée aussi (ensemble noyau/bobine fabriqué sans connaître la géométrie future du palier, notamment son diamètre).

De manière préférée l'invention a comme autre objet de permettre un démontage des ensembles noyau/bobine vis-à-vis du reste du palier, même lorsque celui-ci est monté dans sa structure d'accueil, autorisant ainsi un remplacement ou contrôle aisé des bobines, voire d'adapter un même palier à plusieurs types d'applications en remplaçant seulement un noyau par un autre noyau similaire mais engagé dans un bobinage différent (dont le nombre de spires est par exemple différent).

L'invention propose ainsi un palier du type précité, caractérisé en ce que ledit noyau est rapporté auxdites plaques parallèles, sur les tranches de celles-ci.

Selon des caractéristiques préférées, éventuellement combinées :
- le noyau est rapporté de façon amovible auxdites tranches par des moyens de fixation démontables,
- l'élément à aimantation permanente est, comme dans le document EP-0.284.487, porté par le second corps, entre lesdites plaques parallèles, ledit noyau étant de préférence séparé d'au moins l'une des tranches des plaques parallèles par un entrefer d'épaisseur constante,
- cet entrefer d'épaisseur constante est formé d'une lame d'air ou de vide,
- ledit noyau est rapporté aux tranches des plaques parallèles au moyen de tiges filetées, des rondelles étant engagées autour de ces tiges entre le noyau et les tranches des plaques parallèles, l'épaisseur de l'entrefer étant définie par l'épaisseur de ces rondelles,
- l'élément à aimantation permanente est porté par le premier corps, comme dans le document US-4.470.644,
- ledit noyau est rapporté aux tranches des plaques parallèles par des tiges filetées,
- l'axe de référence est un axe autour duquel tourne le premier corps par rapport au second corps, ce palier comportant une pluralité d'éléments à aimantation permanente, de noyaux et d'armatures reliées entre elles,
- les noyaux sont conformés en plaques planes.

Des objets, caractéristiques et avantages de l'invention ressortent de la description qui suit, donnée à titre d'exemple non limitatif, en regard des dessins annexés sur lesquels :
- la figure 1 est une vue schématique de principe, en coupe selon un plan contenant un axe de référence Z-Z, d'un palier magnétique conforme à l'invention, dans une version simplifiée à un seul axe de centrage magnétique actif (mais avec deux bobines),
- la figure 2 est une vue partielle en perspective, avec arrachement partiel, d'un palier assurant le centrage transversal d'un corps mobile en translation,
- la figure 3 est une vue de dessus d'un autre palier conforme à l'invention, assurant le centrage radial d'un corps mobile en rotation,
- la figure 4 est une vue en coupe axiale du palier de la figure 3, selon la ligne de coupe IV-IV,
- la figure 5 est une vue de dessus d'encore un autre palier, assurant le centrale radial d'un corps mobile en rotation, formé de deux paliers conformes à celui de la figure 1, et
- la figure 6 est une vue agrandie de la partie gauche du palier de la figure 5.

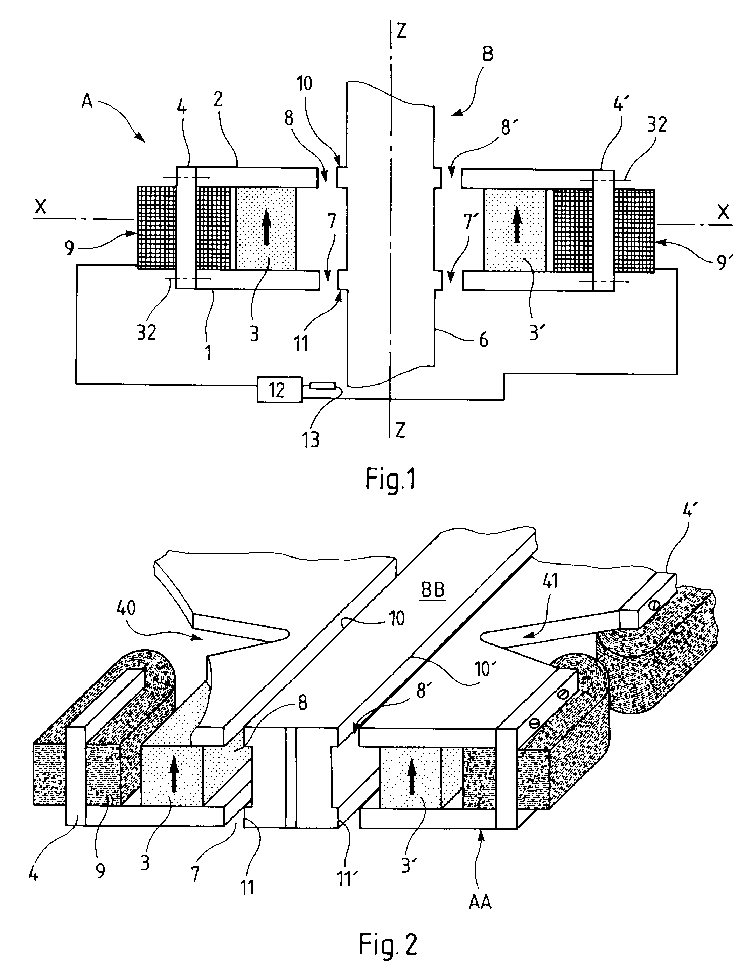

La figure 1 décrit de manière schématique une version de base d'un palier selon l'invention adapté à centrer un corps mobile B par rapport à un autre corps A selon un axe de centrage X-X perpendiculaire à un axe de référence Z-Z.

Pour la suite de la description, par commodité, on admettra que le corps A constitue un stator fixe et rigide, intégrant les éléments fixes de détection et d'entraînement ainsi que les circuits électriques nécessaires au bon fonctionnement du palier.

La pièce B comporte, au moins en regard de la pièce A, une pièce polaire 6 en un matériau ferromagnétique (de tout type connu).

Le palier élémentaire de la figure 1 se décompose en deux parties sensiblement symétriques de part et d'autre d'un plan perpendiculaire à l'axe X-X et contenant l'axe de référence. Les mêmes références sont utilisées pour ces deux parties, avec adjonction d'un indice pour distinguer la partie droite de la partie gauche de cette figure 1.

La partie gauche du palier de la figure 1 comporte deux plaques ferromagnétiques 1 et 2 (en tout matériau ferromagnétique connu) parallèles à l'axe X-X, entre lesquelles est enserré un aimant permanent 3 aimanté parallèlement à l'axe de référence Z-Z. A ces plaques est également fixé un noyau ferromagnétique 4 parallèle à l'axe Z-Z et autour duquel est enroulée une bobine 9. Des entrefers 7 et 8 sont ménagés entre les tranches des plaques ferromagnétiques 1 et 2 et la pièce polaire 6 du corps mobile B. Cette pièce polaire 6 est avantageusement munie de saillies en créneaux 10 et 11 de même épaisseur et de même écartement que les plaques 1 et 2, en regard des tranches de ces dernières.

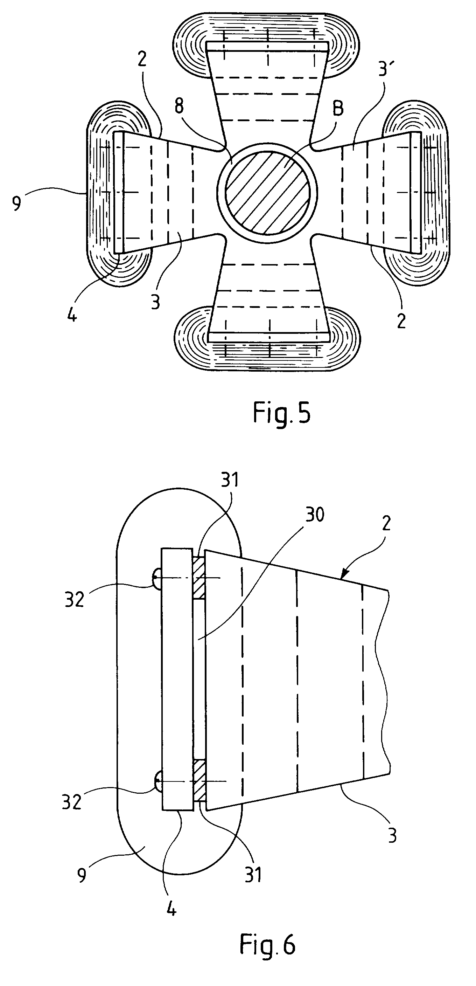

Dans un exemple préféré de réalisation de grande importance pratique, schématisé à la figure 5, selon une disposition générale classique en soi, un palier élémentaire du type décrit à la figure 1 est prévu selon chacun de deux axes perpendiculaires de centrage, eux-mêmes perpendiculaires à l'axe de référence Z-Z. Ces deux paliers à un axe de centrage constituent conjointement un palier plus complexe à deux axes de centrage. Dans ce palier les aimants 3 et 3' de la figure 1 font partie d'un aimant annulaire unique 3-3' aimanté axialement enserré entre deux disques ferromagnétiques 1-1' et 2-2' évidés en leur centre. Les noyaux 4 et 4' font par contre partie d'une série annulaire de noyaux disjoints, à chaque axe de centrage correspondant une paire de noyaux 4, 4' diamétralement opposés et une paire de bobines 9 et 9'.

Les bobines 9-9' montées en série ou en parallèle de toute manière connue, sont alimentées par un courant électrique déterminé de manière classique à partir de l'écart entre le corps mobile B et sa position d'équilibre instable ou, de préférence, à partir de sa vitesse de déplacement parallèlement à l'axe X-X. Ce courant permet de créer un champ magnétique qui vient s'opposer ou s'ajouter, selon le lieu, à celui créé par l'aimant 3.

Ainsi le courant qui passe dans les bobines, déterminé par un circuit de commande 12 à partir d'un capteur 30 de position, de vitesse ou d'accélération en regard de la pièce 6, va permettre par asservissement de piloter la position radiale de la pièce 6 par rapport à la position de l'ensemble des pièces fixes du palier, rendant ainsi le système stable.

L'intérêt de ce palier magnétique à deux axes actifs est de permettre la suspension magnétique d'un arbre ou d'un cylindre pour lequel la translation et le basculement par rapport à l'axe géométrique doit être contrôlé. Les dents 10 et 11, qui sont par exemple constituées par des saillies annulaires parallèles, assurent en effet un centrage magnétique passif selon l'axe Z-Z. Pour augmenter la raideur de ce centrage les dents 10 et 11 et les tranches des plaques ferromagnétiques sont par exemple de section à créneaux multiples.

Le système permet d'assurer le guidage d'un cylindre à travers une paroi magnétique, lorsque celui-ci, exempt de toute dent 10 ou 11, est adapté à se déplacer en translation selon Z-Z.

En effet, si l'on supprime les dents 10 et 11 de la pièce polaire 6 de la figure 2, on obtient un dispositif dont l'axe perpendiculaire au plan de suspension est libre (sans centrage axial). Cet axe peut alors être stable par tous moyens annexes dont les raideurs radiales ne viennent pas perturber la stabilité du dispositif dans le plan de suspension : exemple moteur linéaire sans contact.

Le nombre d'axes de pilotage dans le plan de suspension peut être multiplié autant de fois qu'on le veut ainsi que le nombre de bobines par axe (éventuellement égal à 1).

La figure 2 décrit un autre palier conforme à l'invention adapté au centrage d'un barreau adapté à être déplacé en translation selon un axe perpendiculaire à l'axe de centrage X-X et à l'axe de référence Z-Z. Ce palier est formé d'un alignement d'au moins deux paliers unitaires tels que décrits à la figure 1 et disposés côte à côte, adaptés à agir sur le barreau en des zones successives de sa longueur. Ce palier est ainsi formé, de part et d'autre du barreau central BB, de deux aimants allongés 3 et 3' enserrés entre des plaques allongées 1 et 2, ou 1' et 2' solidaires d'un corps A-A. Parallèlement à ces aimants sont disposés des alignements de noyaux 4 ou 4' entourés par des bobines 9 ou 9'.

On notera que sur la figure 2, des fentes 40 ou 41 sont ménagées dans les plaques ferromagnétiques 1 et 2 et 1' et 2', sauf à proximité de la pièce mobile, en sorte d'assurer une séparation magnétique des champs générés par des bobines adjacentes.

On appréciera que dans le mode de réalisation de la figure 2, grâce aux saillies 10, 11, 10', 11' que présente le barreau à proximité de ses arêtes longitudinales, il y a centrage magnétique actif selon un axe parallèle aux plaques ferromagnétiques et centrage magnétique passif parallèlement à l'axe de référence.

Tels que décrits jusqu'ici, les paliers des figures 1 et 2, ainsi que leur fonctionnement, sont conformes aux enseignements du document EP-0.284.487 (incorporé par référence).

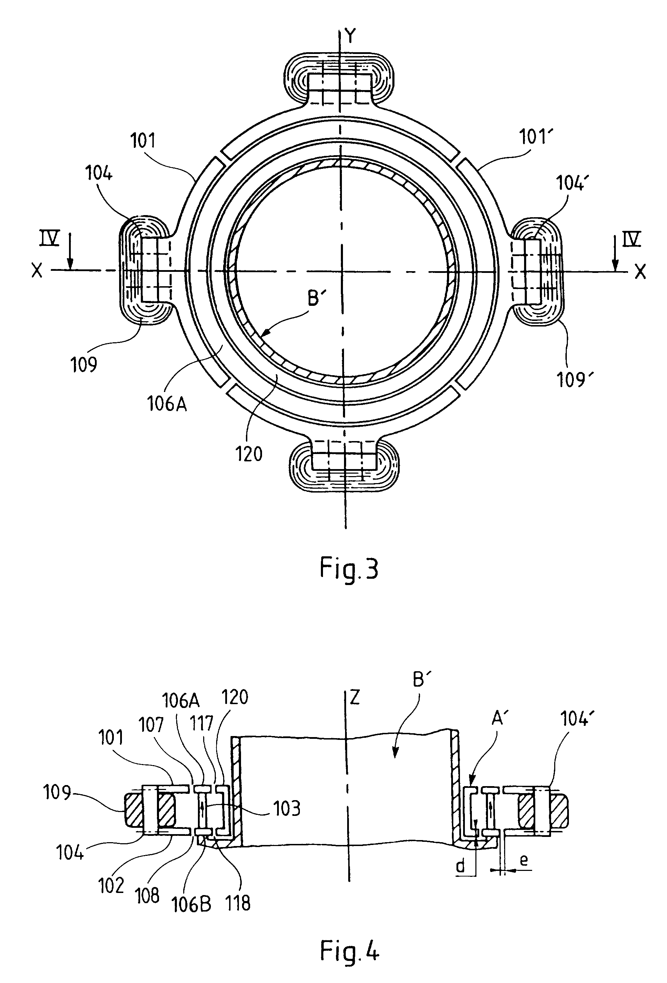

Les figures 3 et 4 représentent quant à elles un autre palier 100 conforme à l'invention, servant au centrage radial actif d'un corps B', ici un rotor, par rapport à un corps A', ici un stator, et formé de deux paliers conformes à la figure 4 et disposés selon des axes X-X et Y-Y perpendiculaires entre eux et à l'axe de référence Z-Z.

Comme précédemment, le palier de la figure 4 comporte de chaque côté de l'axe Z-Z deux plaques ferromagnétiques 101 et 102 parallèles à l'axe de centrage, auxquelles est fixé un noyau ferromagnétique 104 autour duquel est enroulée une bobine 109. Des entrefers 107 et 108 sont ménagés entre les tranches des plaques 101 et 102, et des pièces polaires 106A et 106B solidaires du corps B' mobile par rapport au corps A'.

A la différence des figures 1 et 2, les paliers des figures 3 et 4 comportent un aimant 103, non pas enserré entre les plaques 101 et 102 auxquelles le noyau est fixé, mais enserré entre les pièces polaires 106A et 106B ; en outre, dans l'exemple représenté, une pièce ferromagnétique supplémentaire 120, conformée en C, est fixée sur le corps A', à l'opposé des pièces 101 et 102 par rapport à l'aimant 103 ; ses tranches, de même épaisseur d que les pièces 101, 102, 106A et 106B, déterminent avec les pièces 106A et 106B des entrefers 117 et 118, par exemple de même largeur e que les entrefers 107 et 108.

Tel que décrit jusqu'ici, le palier à 2-axes ou les deux palier à 1-axe des figures 3 et 4, sont conformes aux enseignements du document US-4.470.644 (incorporé par référence).

Selon l'invention, les noyaux 4, 4', 104 et 104' sur lesquels sont enroulées les bobines 9, 9', 109 ou 109' sont rapportés sur les tranches des pièces polaires 1, 2, 1', 2', 101 ou 102.

Cela a notamment pour avantage de permettre que ces noyaux soient montés à n'importe quelle étape de l'assemblage du palier voire du montage de celui-ci au sein d'une structure d'accueil.

Cela a également pour avantage de permettre que ces noyaux soient montés de façon amovible (en utilisant donc des moyens de fixation démontables avantageusement accessibles de l'extérieur du palier, et non pas des solutions définitives telles que collage ou soudage) . Cela confère une grande souplesse d'adaptation : remplacement d'une bobine détériorée, remplacement d'une bobine par une autre bobine de performances différentes mieux adaptées aux besoins de l'instant, etc..

On peut ainsi, en enroulant sur des noyaux identiques des bobines différentes (en largeur et/ou en diamètre et/ou en matériau de fil), obtenir toute une gamme de couples noyaux/bobines interchangeables permettant un choix précis de la raideur finale du palier.

De manière particulièrement avantageuse, le noyau est séparé par un entrefer 30 d'épaisseur constante vis-à-vis d'au moins l'une (de préférence des deux) des tranches des plaques ferromagnétiques 1 et 2 (ou 1' et 2', 101 et 102, ...), en sorte de réaliser la cale statique préconisée par le document EP-0.284.487 précité.

Il est à noter que l'obtention d'un tel entrefer 30 est bien plus facile à réaliser (à n'importe quelle étape de la fabrication) que lorsque le noyau est enserré entre les plaques ferromagnétiques.

Ainsi, comme cela ressort de la figure 6 qui est un détail agrandi de la figure 5, l'entrefer 30 peut être formé d'une simple lame d'air (ou de vide ; cela dépend de l'environnement du palier), avec une épaisseur par exemple déterminée par celle de simples entretoises 31.

De manière préférée, lorsque les noyaux sont fixés de façon amovible à l'aide de tiges filetées 32 telles que des vis ou des boulons, ces entretoises peuvent être de simples rondelles entourant ces tiges.

On appréciera que le réglage du (ou des) entrefer(s) 30 est très aisé, sous réserve de disposer d'une gamme de rondelles d'épaisseurs diverses (on peut également, le cas échéant, jouer sur l'effort de serrage en comprimant plus ou moins ces rondelles). On peut disposer un capteur d'induction dans cet entrefer pour le mesurer.

Bien entendu ces entrefers peuvent être supprimés si besoin est (dans le cas du document US-4.470.644 notamment).

Pour des raisons de stockage, de fabrication et de montage, les noyaux sont avantageusement plans (cela permet en particulier un vissage aisé, mais aussi la possibilité de monter un noyau aussi bien dans un palier de corps tournant que de corps en translation.

Il va de soi que la description qui précède n'a été proposée qu'à titre d'exemple non limitatif et que de nombreuses variantes peuvent être proposées par l'homme de l'art sans sortir du cadre de l'invention. C'est ainsi notamment qu'il peut n'y avoir qu'une seule bobine par axe de centrage.

## Revendications

1. Palier magnétique pour le centrage magnétiquement actif selon au moins un axe de centrage (X-X), perpendiculaire à un axe de référence (Z-Z), d'une premier corps (B, B', BB) mobile selon au moins cet axe de centrage par rapport à un second corps (A, A', AA), comportant :
- au moins un élément (3, 3', 103, 103') à aimantation permanente sensiblement parallèle à l'axe de référence,
- au moins une bobine (9, 9', 109, 109') enroulée autour d'un noyau ferromagnétique (4, 4', 104, 104') sensiblement parallèle à l'axe de référence et porté par le second corps,
- une armature ferromagnétique formée d'une première partie ferromagnétique (6, 106A, 106B) portée par le premier corps et d'une seconde partie ferromagnétique portée par le second corps, ces première et seconde parties ferromagnétiques étant adaptées conjointement à refermer sur eux-mêmes des flux générés par l'aimant et la bobine au travers d'entrefers (7, 8, 117, 118) séparant ces première et seconde parties ferromagnétiques, cette seconde partie ferromagnétique comportant deux plaques parallèles (1, 2, 101, 102), perpendiculaires à l'axe de référence, rapportées chacune au noyau de part et d'autre de la bobine et ayant des tranches orientées transversalement à l'opposé des entrefers,
ce palier étant caractérisé en ce que ledit noyau (4, 4', 104, 104') est rapporté auxdites plaques parallèles, sur les tranches de celles-ci.

2. Palier magnétique selon la revendication 1, caractérisé en ce que le noyau est rapporté de façon amovible auxdites tranches par des moyens de fixation démontables (32).

3. Palier magnétique selon la revendication 1 ou 2, caractérisé en ce que l'élément (3, 3') à aimantation permanente est porté par le second corps, entre lesdites plaques parallèles (1, 2, 1', 2'), ledit noyau étant séparé d'au moins l'une des tranches des plaques parallèles par un entrefer (30) d'épaisseur constante.

4. Palier magnétique selon la revendication 3, caractérisé en ce que cet entrefer (30) d'épaisseur constante est formé d'une lame d'air ou de vide.

5. Palier magnétique selon la revendication 4, caractérisé en ce que ledit noyau est rapporté aux tranches des plaques parallèles au moyen de tiges filetées (32), des rondelles (31) étant engagées autour de ces tiges entre le noyau et les tranches des plaques parallèles, l'épaisseur de l'entrefer étant définie par l'épaisseur de ces rondelles.

6. Palier magnétique selon la revendication 1 ou 2, caractérisé en ce que l'élément (103, 103') à aimantation permanente est porté par le premier corps.

7. Palier magnétique selon la revendication 6, caractérisé en ce que ledit noyau est rapporté aux tranches des plaques parallèles par des tiges filetées (32).

8. Palier magnétique selon l'une quelconque des revendications 1 à 7, caractérisé en ce que l'axe de référence est un axe autour duquel tourne le premier corps par rapport au second corps, ce palier comportant une pluralité d'éléments à aimantation permanente, de noyaux et d'armatures reliées entre elles.

9. Palier magnétique selon la revendication 8, caractérisé en ce que les noyaux (4, 4', 104, 104') sont conformés en plaques planes.
